# EUROPÄISCHE PATENTSCHRIFT

(11) **EP 0 732 449 B1**
(45) Veröffentlichungstag und Bekanntmachung des Hinweises auf die Patenterteilung: **25.08.1999**
(21) Anmeldenummer: 96100880.2
(22) Anmeldetag: 23.01.1996
(51) Int. Cl.: D21H 23/72, D21H 27/28, D21H 19/36

(54) **Verfahren zur Herstellung von Dekorpapier zur Verwendung bei der Herstellung von abriebfesten Laminaten**
Process for the production of decor paper to be used for the manufacture of abrasion-resistant laminates
Procédé de fabrication de papier décor pour l'usage pendant la production des laminés résistant à l'abrasion

(30) Priorität: 15.03.1995 DE 19508797
(43) Veröffentlichungstag der Anmeldung: 18.09.1996
(73) Patentinhaber: Dr. Graudenz & Partner Consultation GmbH, 32760 Detmold (DE)
(72) Erfinder: Titho, Gunter, D-32760 Detmold (DE); Graudenz, Eckhard, Dr., D-32760 Detmold (DE)
(74) Vertreter: Eikel, Cordula

(56) Entgegenhaltungen:
- EP-A- 0 186 257
- EP-A- 0 329 154
- US-A- 3 135 643
- US-A- 3 975 572
- US-A- 4 322 468

## Beschreibung

Die Erfindung betrifft ein Verfahren zur Herstellung von Dekorpapier zur Verwendung bei der Herstellung von abriebfesten Laminaten mit den Merkmalen des Oberbegriffes des Schutzanspruches 1.

Bedrucktes oder unbedrucktes unifarbenes Dekorpapier wird üblicherweise mit reinem Melaminharz imprägniert und später mit Unterlagsfilmen, imprägniert mit Phenolharzen oder anderen Harzen, zu Schichtstoffen zusammengepreßt um ein dekoratives Laminat zu formen.

Um eine erhöhte Abriebfestigkeit der Oberfläche zu erreichen, wird üblicherweise ein Overlay aus melamingetränkter α-Zellulose auf die Oberfläche gelegt und zusammen mit den anderen Filmen verpreßt. Ein solches Overlay wird durchsichtig unter den Preßbedingungen. Dieses Overlay gibt dabei einen Anfangsabrieb von ungefähr 150 bis 250 Umdrehungen, gemessen mit einer genormten Vorrichtung (Taber-Abraser). Dieses Overlay kann darüber hinaus auch einseitig mit Korundpulver beschichtet sein, um Anfangsabriebe bis zu 8300 Umdrehungen zu erreichen. Ein derartiges Verfahren ist aus EP-A-0 329 154 bekannt.

Dabei ist es jedoch jeweils zunächst einmal notwendig, in einem gesonderten Verfahren ein derartiges Overlay herzustellen, in einem weiteren Verfahrensschritt mit Korundpulver zu beschichten, um dann die so hergestellten Bahnen in einem weiteren Verfahrensschritt auf dem Dekorbogen anzubringen. Dies hat erhöhte Herstellungs- und Lagerhaltungskosten zur Folge. Darüber hinaus steht das Korundpulver an der Oberfläche an, so daß ein insgesamt rauher Eindruck der Oberfläche entsteht und darüber hinaus die Gefahr einer Beschädigung bzw. eines erhöhten Verschleißes der Preßwerkzeuge besteht.

Diese Nachteile sollten dadurch beseitigt werden, daß entsprechend des im EP-A-0 186 257 aufgezeigten Verfahrens ein flüssiges, wärmehärtbares Sättigungsharz und eine abriebfeste Zusammensetzung zur Beschichtung vorgesehen werden, wobei der Dekorbogen mit dem flüssigen Harz im wesentlichen gesättigt wird und die abriebfeste Zusammensetzung auf der Sichtfläche in einer ultradünnen Schicht abgelagert wird. Dadurch kommt es jedoch ebenfalls dazu, daß das Korund aus der oberen Schicht hervorsteht, d.h. aus der zu benutzenden und sichtbaren Oberfläche austritt und dadurch ein insgesamt rauher Eindruck entsteht.

Hinzu kommt, daß dadurch die Gefahr einer Beschädigung der in der Nachbehandlung eingesetzten Werkzeuge sowie ein erhöhter Verschleiß dieser Werkzeuge, insbesondere Pressen, besteht. Bei den zuvor genannten Techniken ist eine relativ hohe Korundmenge erforderlich, um eine gewünschte Abriebfestigkeit zu erreichen, so daß dies Nachteile hinsichtlich der gewünschten Transparenz bzw. Klarheit der abriebfesten Oberfläche mit sich bringt und der darunter befindliche Dekorbogen nicht in der gewünschten Deutlichkeit sichtbar wird.

Aus der US-A-3,135,643 ist bekannt, daß es problematisch ist, ein mit Kunstharz imprägniertes, nasses Dekorpapier mit einer weiteren, flüssigen Harzschicht zu versehen. Es ist dort deshalb vorgesehen, daß das in einem ersten Bad imprägnierte, nasse Dekorpapier zwischen zwei Quetschwalzen hindurchgeführt wird, wobei eine Reduktion des flüssigen Harzanteiles erfolgt. Nach Entfernen des Harzanteiles und damit einer Reduzierung des Flüssigkeitsanteiles folgt ein weiterer Flüssigkeitsauftrag, ein sogenanntes Coating dieses imprägnierten Dekorpapiers mit einer weiteren, flüssigen Zusammensetzung, die Melaminharz, ein Fasermaterial und Kieselsäure enthält. Nach diesem zweiten Imprägnieren ist das Trocknen und damit das gemeinsame Aushärten beider Harze in einem Trockenofen vorgesehen.

Der Erfindung liegt daher die Aufgabe zugrunde, ein Verfahren zur Herstellung von Dekorpapier zur Verwendung bei der Herstellung von abriebfesten Laminaten bereitzustellen, das sich durch hohe Abriebfestigkeit unter Verwendung von relativ geringen Mengen von abriebfesten Mineralien, hoher Klarheit sowie einem einfachen und preiswerten Herstellungsverfahren auszeichnet.

Diese Aufgabe wird bei einem Verfahren zur Herstellung von Dekorpapier zur Verwendung bei der Herstellung von abriebfesten Laminaten mit den Merkmalen des kennzeichnenden Teiles des Patentanspruchs 1 gelöst. Weitere vorteilhafte Ausgestaltungen der Erfindung sind Gegenstand der Ansprüche 2 bis 13.

Dadurch, daß das Gemisch unter intensiver Durchmischung aus Melaminharz, α-Zellulose in einer Menge von 15-25 Gewichtsprozent und mit einer Faserlänge von 10-40µm, Korund als abriebfestes Mineral in einer Menge von 1-16 Gewichtsprozent und einer Korngröße von 15-48µm, Additiven und Wasser eine vorbestimmte Viskosität erreichend hergestellt wird, daß das Gemisch auf die Sichtseite des wenigstens in einem vorhergehenden Arbeitsschritt mit Harz getränkten und bis auf eine vorbestimmte Restfeuchte von 13-25% Feuchtigkeit getrockneten Dekorbogens in einer solchen Menge aufgebracht wird, daß die Dicke dieser Beschichtung nach Erreichen der Endfeuchte 20-65µm beträgt und daß der so beschichtete Dekorbogen in wenigstens einem weiteren Arbeitsschritt auf die Endfeuchte getrocknet und ggfls. weiteren Bearbeitungsschritten zugeführt wird, wird ein Verfahren bereitgestellt, mit dem ein Dekorpapier geschaffen wird, das sich durch eine abriebfeste Oberfläche auszeichnet, ohne daß ein vorgefertigtes Overlay durch Verpressen aufgebracht wurde.

Vielmehr ermöglicht dieses Verfahren die Benutzung üblicher Maschinen zum Tränken des Dekorpapiers in einer Unterbrechung im Trockenkanal, wobei in dieser Sektion dann eine übliche Vorrichtung angeordnet ist, die das flüssige Gemisch auf die zu beschichtende Oberfläche aufträgt.

Das abriebfeste Mineral wird dabei im Gemisch dispergiert und an die Fasern der α-Zellulose fixiert. Es entsteht ein Harzgemisch mit deutlich erhöhter Viskosität gegenüber dem normalen Melaminharz.

Das Mineral ist bereits im Gemisch homogen in der gesamten Dispersion verteilt und damit nach dem Auftrag auf die zu schützende Oberfläche ebenfalls in dieser Schicht homogen verteilt, so daß eine hohe Abriebfestigkeit erzielt wird, ohne daß das Mineral aus der Schicht hinausragt oder aber eine nicht gewollte rauhe Oberfläche entsteht, die zudem noch die Gefahr in sich bergen würde, bei der weiteren Verarbeitung des so geschaffenen Dekorpapiers die Werkzeuge zu beschädigen bzw. einen erhöhten Verschleiß zu verursachen.

Wird das Gemisch unter intensiver Rührbewegung hergestellt, so wird hier auf eine einfache aber wirkungsvolle Technik zurückgegriffen.

Da dem unter intensiver Durchmischung herzustellenden Gemisch α-Zellulose in einer Menge von 15 bis 25% Gewichtsprozent des flüssigen Gemisches beigegeben ist und diese α-Zellulose eine Faserlänge von 10 bis 40µm aufweist, hat dies zur Folge, daß das im Gemisch befindliche Harz, d.h. das Oberflächenmelaminharz, nicht mehr in den Dekorbogen, d.h. das Papier, und durch das Papier in den Träger penetriert, sondern vielmehr an der Oberfläche, d.h. die Schicht bildend, verbleibt.

Es bleibt somit eine relativ dicke Harzschicht in dem fertigen Produkt über der eigentlichen dekortragenden Papieroberfläche, so daß das im Gemisch befindliche Mineral, Korundpulver, an der Oberfläche nicht zu spüren ist und dadurch eine glatte Oberfläche entsteht.

Darüber hinaus ist nur eine relativ geringe Korundmenge zur Erreichung der abriebfesten Oberfläche von Nöten.

Da das beizugebende abriebfeste Mineral, Korundpulver, eine Körnung von 300 bis 900 mesh, d.h. eine Korngröße von 15-48µm aufweist, wird dadurch eine Körnung gewählt, die zum einen das Erreichen einer abriebfesten Oberfläche gewährleistet und zum anderen sicherstellt, daß in besonders vorteilhafter Weise ein homogenes Gemisch mit glatter Oberfläche erzeugt werden kann.

Da dem herzustellenden Gemisch das Korundpulver in einer Menge von 1 bis 16 Gewichtsprozent des flüssigen Gemisches beigegeben wird, kann dadurch die Abriebfestigkeit, insbesondere die gewünschte Höhe des Anfangsabriebs, gewählt werden, so daß z.B. für einen Anfangsabrieb von über 6000 Umdrehungen eine Menge von 14 bis 16 Gewichtsprozent Korundpulver vorgesehen wird.

Weiter wird das Gemisch in einer Stärke aufgetragen, die nach Erreichen der Endfeuchte 20 bis 65µm beträgt. So wird erreicht, daß eine relativ dicke abriebfeste Schicht aufgetragen wird, die sicherstellt, daß das hierin befindliche abriebfeste Mineral, Korund, nicht ausschließlich an der Oberfläche zu finden ist, sondern in der Mehrzahl innerhalb der Schicht plaziert ist.

Wird das Gemisch in einer Menge aufgetragen, die eine auf der Oberfläche des Dekorbogens verbleibende trockene Harzmenge von 30 bis 130 g/m² gewährleistet, so wird dadurch eine insgesamt glatte Oberfläche erzeugt.

Wird das unter intensiver Durchmischung hergestellte Gemisch auf der Sichtseite des in einem ersten Imprägnierbad mit einem Feststoffgehalt von 42 bis 52%, bezogen auf das Gesamtgewicht des trockenen Dekorbogens, melaminharzgetränkten und in einer ersten Sektion eines Trockenkanals bis zu einer Restfeuchte von 13 bis 25% Feuchtigkeit getrockneten Dekorpapiers aufgetragen, wobei der Auftrag in einer den Trockenkanal unterbrechenden Sektion vorgenommen wird, und wird der so beschichtete Dekorbogen in einem zweiten Abschnitt des Trockenkanals auf eine Endfeuchte von 3,5 bis 7% getrocknet, so wird dadurch ein Verfahren bereitgestellt, das ein Höchstmaß an Abriebfestigkeit bei gleichzeitig zu erreichender hoher Klarheit der abriebfesten Schicht und geringen Herstellungskosten gewährleistet.

Wird das Gemisch mittels eines Drahtrakels mit einer Drahtstärke von 0,8 bis 2mm aufgebracht, d.h., mittels eines "Meyer Bar", so erlaubt dies den Auftrag von ca. 80 bis 200 g/m² des flüssigen Harzgemisches, je nach zu erzielenden Abriebwerten.

Wird das Gemisch mittels eines Reverscoating-Systems aufgetragen, so wird auch hier auf ein bewährtes System zurückgegriffen, das sich durch eine hohe Zuverlässigkeit auszeichnet.

Wird das Gemisch mittels einer Rasterwalze aufgebracht, so ist es darüber hinaus möglich, diese Rasterwalze mit einer Keramikoberfläche auszustatten, um so eine Auftragsmöglichkeit zu erhalten, die sich durch geringen Verschleiß auszeichnet.

Durch die homogene Verteilung des Minerals in der abriebfesten Schicht ist es möglich, mit relativ wenig abriebfestem Mineral ein Höchstmaß an Abriebfestigkeit zu erzielen, d.h. es wird weniger Korundpulver als im Stand der Technik benötigt, um die gleichen Abriebfestigkeiten zu erzielen.

Ist die abriebfeste Oberfläche ein flüssig auftragbares Gemisch nach der Erfindung, so ist dadurch die Möglichkeit geschaffen, die abriebfeste Oberfläche auf einfachste Art und Weise aufzutragen, ohne daß hier zunächst einmal ein Zwischenprodukt, d.h. ein festes Overlay, geschaffen werden müßte und gleichzeitig sichergestellt, daß trotz hoher Abriebfestigkeit eine glatte Oberfläche erzeugt werden kann, da das abriebfeste harte Mineral homogen in der abriebfesten Oberfläche verteilt ist.

Das so ausgestaltete Dekorpapier kann dabei üblichen Weiterverarbeitungsvorgängen zugeführt werden, d.h. das Produkt kann dann in üblicher Weise zu einem Laminat verpreßt werden oder aber auch im Falle der Direktbeschichtung von Holzwerkstoffen auf die Oberfläche derselben z.B. in Kurztaktpressen verbracht werden.

Denkbar ist jedoch auch jegliche andere Verwendung, d.h. z.B. das Aufbringen auf Papier oder Kunststoffe.

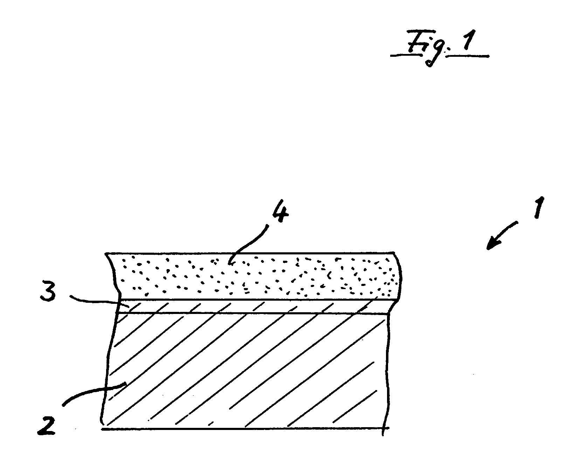

In der Zeichnung Fig.1 ist ein mit dem erfindungsgemäßen Dekorpapier beschichteter Holzwerkstoff entsprechend eines ersten Ausführungsbeispieles im Schnitt dargestellt.

Wie aus Fig. 1 zu ersehen, besteht das erfindungsgemäße Dekorpapier (1) in dem hier vorliegenden Ausführungsbeispiel aus einem Trägerpapier (2), d.h. einem bedruckten Dekorbogen, der an seiner Oberfläche (3) bedruckt ist und im übrigen imprägniert ist mit 42 - 52 % des Gewichtes (Papier plus Harz) mit Melaminharz.

Darüber hinaus ist auf der bedruckten Oberfläche (3) ein erfindungsgemäßes abriebfestes Gemisch (4), d.h. eine abriebfeste Oberfläche, angeordnet.

Bei dem bedruckten Papier (2) kann es sich dabei um einen üblichen, zur Dekorpapierherstellung benutzten bedruckten oder unbedruckten oder unifarbenen oder mehrfarbigen Dekorbogen (2) handeln, der in üblicher Art und Weise hergestellt werden kann, d.h., z.B., wie oben beschrieben, mit reinem Melaminharz imprägniert sein kann und später mit entsprechenden Unterlagsfilmen, imprägniert mit Phenolharzen oder anderen Harzen zu Schichtstoffen zusammengepreßt werden, um, mit der aufgebrachten abriebfesten Oberfläche z.B. direkt auf einen Holzwerkstoff durch Beschichtung aufgebracht zu werden.

Darüber hinaus ist es jedoch ebenso denkbar, das zuvor beschriebene Papier (2) nebst der darauf angebrachten abriebfesten Oberfläche (4) in üblicher Weise zu einem Laminat zu verpressen.

Es ist nach dem erfindungsgemäßen Verfahren nicht notwendig, eine separate Auflageschicht zur Erreichung einer erhöhten Abriebfestigkeit auf das Dekorpapier (1) durch Verpressen aufzulegen, d.h., ein sog. Overlay, das aus Melamin getränkter Alpha-Zellulose bestehen kann und auf die Oberfläche aufgelegt werden muß, um dann zusammen mit den anderen Filmen verpreßt zu werden.

Entsprechend des erfindungsgemäßen Verfahrens, das hier anhand einzelner Verfahrensabschnitte schematisch dargestellt werden soll, wird in einem ersten Imprägnierbad der Dekorbogen (2) mit normalem Melaminharz getränkt zu einem Feststoffgehalt von vorzugsweise 42 bis 52 %, bezogen auf das Gesamtgewicht des trockenen Produktes, d.h. des Trägerpapiers (2).

Dieser Film wird dann in einem weiteren Verfahrensschritt in einer ersten Sektion eines üblichen Trockenkanals, vorteilhafterweise bis zu einer Restfeuchte von 13 bis 23 %, getrocknet.

In einem weiteren Verfahrensschritt wird dann die abriebfeste Oberfläche (4), bestehend aus einem noch näher zu beschreibenden erfindungsgemäßen Gemisch, aufgebracht.

Vorteilhafterweise kann dies ebenfalls innerhalb des Bereiches des Trockenkanals geschehen, wobei dies dann in einem Abschnitt geschieht, in dem der Trocknungsvorgang zu unterbrechen ist und eine geeignete Vorrichtung zur Auftragung des erfindungsgemäßen Gemisches (4) vorgesehen ist.

Diese Auftragsvorrichtung kann z.B. "ein Meyer Bar" sein, mit einer Drahtstärke von 0,8 bis 2 mm. Ein derartiges Drahtrakel erlaubt den Auftrag von z.B. 80 bis 200 g/m² des erfindugnsgemäßen Gemisches.

Die zu erzielende Auftragsmenge hängt dabei von den gewünschten Abriebwerten ab.

Es ist allerdings ebenso denkbar, ein anderes System zum Auftrag des erfindungsgemäßen Gemisches zu verwenden, d.h., z.B. auch ein sog. "Reverscoating System" oder eine Bei Verwendung der Rasterwalze kann diese z.B. mit einer Keramikoberfläche ausgestattet sein, um einen vorzeitigen Verschleiß zu vermeiden.

Das erfindungsgemäße Gemisch (4) besteht hier aus einem flüssigen Harzgemisch, d.h., dieses modifizierte Harz besteht aus Melaminharz mit Additiven, wie sie üblicherweise benutzt werden, wie z.B. Härter, Netzmittel, Trennmittel und Wasser.

Zusätzlich wird erfindungsgemäß Alpha-Zellulose in einer Menge von 15 bis 25 % Gewichtsprozent des flüssigen Gemisches (4), in einer Faserläge von 10 bis 40 µ Länge zugegeben, wobei durch Zusatz von Wasser dabei eine Viskosität des Gemisches von vorteilhafterweise 15 bis 80 Sec., gemessen im "Fordbecher" 4 mm eingestellt wird.

Desweiteren wird ein Korundpulver in einer Körnung von 300 bis 900 mesh zugegeben in einer Menge von vorteilhafterweise 2-30 % Gewichtsprozente, bezogen auf die Oberflächenbeschichtung (4) bei einer Endfeuchte von 3,5-7 %, je nach gewünschter Höhe des Anfangsabriebs.

Bezogen auf das flüssige Gemisch (4) wird Korundpulver in einer Menge von 1-16 % Gewichtsprozent, je nach gewünschter Höhe des Anfangsabriebs, zugegeben.

Bei einem gewünschten Anfangsabrieb von z.B. über 6000 Umdrehungen werden etwa 16 Gewichtsprozent Korundpulver hinzugegeben.

Mit dem erfindungsgemäßen Gemisch sowie dem erfindungsgemäßen Verfahren zur Aufbringung des Gemisches (4) ist es möglich, Anfangsabriebe, d.h., erste Abriebserscheinungen, bei Umdrehungen von 0 bis 12.000 Umdrehungen, je nach Anteil des Coruntpulvers, zu erreichen.

Bei der Herstellung des Gemisches (4) wird dieses intensiv verrührt, um das spezifisch schwere Korundpulver gut zu dispergieren und an die Fasern der Alpha-Zellulose zu fixieren. Es entsteht dadurch ein Harzgemisch mit deutlich erhöhter Viskosität gegenüber dem normalen Melaminharz.

Das erfindungsgemäße Harzgemisch (4) weist vorzugsweise einen Feststoffgehalt von 45 bis 55 % vor Aufbringen auf die Oberfläche auf.

Das erfindungsgemäße Gemisch (4) verbleibt dabei nahezu vollständig auf dem aufgebrachten Untergrund in einer relativ dicken Schicht, d.h., der Oberfläche (3) des Dekorbogens, wobei die Menge des trockenen Harzes des Gemisches (4) auf der Oberfläche (3) gehalten wird und vorteilhafterweise 30 bis 130 g/m² beträgt.

Bei einem spezifischen Gewicht von ca. 1,35 g/cm³ resultiert eine Schichtdicke der Harzoberfläche über den Fasern des Dekorbogens, d.h. der Oberfläche (3), von 20 bis 65 µ.

Im Anschluß an die das erfindungsgemäße Gemisch (4) auftragende Arbeitsstation wird dann der mit dem Gemisch beschichtete Film bzw. Dekorbogen (2) in einem weiteren Arbeitsschritt, d.h., im zweiten Trockenschritt auf eine Endfeuchte von vorzugsweise 3,5 bis 7 % getrocknet und kann dann der weiteren Laminatherstellung zugeführt werden.

Üblicherweise wird dieser Film (1), d.h., der so beschichtete Dekorbogen (2), dann zu einem Laminat verpreßt oder im Falle einer Direktbeschichtung von Holzwerkstoffen auf die Oberfläche des Holzwerkstoffes in z.B. Kurztaktpressen, aufgebracht.

## Patentansprüche

1. Verfahren zur Herstellung von Dekorpapier zur Verwendung bei der Herstellung von abriebfesten Laminaten, bei dem ein viskoses, abriebfeste Mineralbestandteile mit feiner Teilchengröße aufweisendes Gemisch auf die Sichtfläche eines Dekorbogens aufgebracht wird, **dadurch gekennzeichnet,** daß das Gemisch aus
a) Melaminharz,
b) α-Zellulose in einer Menge von 15-25 Gew.-% und mit einer Faserlänge von 10-40 µm,
c) Korund als abriebfestes Mineral in einer Menge von 1-16 Gew.-% und einer Korngröße von 15-48 µm (300 bis 900 mesh),
d) Additiven und
e) Wasser
unter intensiver Durchmischung so hergestellt wird, daß eine vorbestimmte Viskosität erreicht wird, und das Gemisch auf die Sichtseite des wenigstens in einem vorhergehenden Arbeitsschritt mit Harz getränkten und bis auf eine Restfeuchte von 13-25 % Feuchtigkeit getrockneten Dekorbogens in einer solchen Menge aufgebracht wird, daß die Dicke dieser Beschichtung nach Erreichen der Endfeuchte 20-65 µm beträgt, und daß der so beschichtete Dekorbogen in wenigstens einem weiteren Arbeitsschritt auf die Endfeuchte getrocknet wird.

2. Verfahren nach Anspruch 1, dadurch gekennzeichnet, daß als Additive wenigstens Härter, Netzmittel und Trennmittel eingesetzt werden.

3. Verfahren nach Anspruch 1 oder 2, dadurch gekennzeichnet, daß das Gemisch unter intensiver Rührbewegung hergestellt wird.

4. Verfahren nach einem der Ansprüche 1 bis 3, dadurch gekennzeichnet, daß das Gemisch in einer Menge von 80-200 g/m² aufgetragen wird.

5. Verfahren nach einem der Ansprüche 1 bis 4, dadurch gekennzeichnet, daß das Gemisch in einer Menge aufgetragen wird, die eine auf der Oberfläche des Dekorbogens verbleibende trockene Harzmenge von 30-130 g/m² gewährleistet.

6. Verfahren nach einem der Ansprüche 1 bis 5, dadurch gekennzeichnet, daß das, unter intensiver Durchmischung hergestellte Gemisch, auf der Sichtseite des in einem Imprägnierbad mit einem Feststoffgehalt von 42-52%, bezogen auf das Gesamtgewicht des trockenen Dekorbogens, melaminharzgetränkten und in einer Sektion eines Trockenkanals bis zu einer Restfeuchte von 13-25% Feuchtigkeit getrockneten Dekorpapiers aufgetragen wird, wobei der Auftrag in einer den Trockenkanal unterbrechenden Sektion vorgenommen wird, und daß der so beschichtete Dekorbogen in einem zweiten Abschnitt des Trockenkanals auf eine Endfeuchte von 3,5-7% getrocknet wird.

7. Verfahren nach einem der Ansprüche 1 bis 6, dadurch gekennzeichnet, daß das Gemisch mittels eines Drahtrakels mit einer Drahtstärke von 0,8-2 mm aufgebracht wird.

8. Verfahren nach einem der Ansprüche 1 bis 6, dadurch gekennzeichnet, daß das Gemisch mittels eines Reverscoating-Systems aufgetragen wird.

9. Verfahren nach einem der Ansprüche 1 bis 6, dadurch gekennzeichnet, daß das Gemisch mittels einer Rasterwalze aufgebracht wird.

10. Vefahren nach einem der Ansprüche 1 bis 9, dadurch gekennzeichnet, daß die α-Zellulose einen Gewichtsanteil von 15 bis 25 % des Gemisches (4) bei einer Endfeuchte von 3,5-7 % umfaßt.

11. Verfahren nach einem der Ansprüche 1 bis 10, dadurch gekennzeichnet, daß das Korundpulver in einer Menge von 2 bis 30 % Gewichtsprozent des Gemisches (3) bei einer Endfeuchte von 3,5-7 % vorliegt.

12. Vefahren nach einem der Ansprüche 1 bis 11, dadurch gekennzeichnet, daß einem Harzgemisch aus Melaminharz, α-Zellulose, Additiven und Wasser mit einer Viskosität von 15 bis 80 sec., gemessen in einem Ford-Becher 4 mm, Korund als abriebfestes Mineral zugegeben wird.

13. Verfahren nach einem der Ansprüche 1 bis 12, dadurch gekennzeichnet, daß das auf die Oberfläche (2) des vorgetränkten Dekorbogens (1) aufzutragende Gemisch in viskosem Zustand einen Feststoffgehalt von 44 bis 55 % aufweist.

## Claims

1. A process for the manufacture of decorative paper for use in the manufacture of abrasion-resistant laminates wherein a viscous mixture having abrasion-resistant mineral components of fine particle size is applied to the visible surface of a decorative sheet, characterised in that the mixture is made of
a) melamine resin,
b) α-cellulose in a quantity of 15-25 % by weight and with a fibre length of 10-40 µm,
c) corundum as abrasion-resistant mineral in a quantity of 1-16 % by weight and a grain size of 15-48 µm (300 to 900 mesh)
d) additives and
e) water
under intensive mixing so that a pre-determined viscosity is achieved and the mixture is applied to the visible side of a decorative sheet which has been impregnated with resin during at least one preceding operation and dried to a residual moisture of 13-25 % moisture in such a quantity that the thickness of this coating after reaching the final moisture amounts to 20-65 µm and that the decorative sheet so coated is dried to the final moisture in at least an additional operation.

2. A process according to claim 1, characterised in that at least hardener, wetting agents and release agents are employed as additives.

3. A process according to claims 1 or 2, characterised in that the mixture is manufactured under intensive agitation movement.

4. A process according to one of the claims 1 to 3, characterised in that the mixture is applied in a quantity of 80-200 g/m² .

5. A process according to one of the claims 1 to 4, characterised in that the mixture is applied in a quantity which ensures a dry resin quantity of 30-130 g/m² remains on the surface of the decorative sheet.

6. A process according to one of the claims 1 to 5, characterised in that the mixture manufactured under intensive mixing is applied to the visible side of a decorative paper which has been impregnated with melamine resin in an impregnation bath with a solid matter content of 42-52 % based on the total weight of the dried decorative sheet and dried to a residual moisture of 13-25 % moisture in a section of a drying channel wherein the application is effected in a section interrupting the drying channel and that the decorative sheet thus coated is dried to a final moisture of 3.5-7 % in a second section of the drying channel.

7. A process according to one of the claims 1 to 6, characterised in that the mixture is applied by means of a wire doctor blade having a wire thickness of 0.8-2 mm.

8. A process according to one of the claims 1 to 6, characterised in that the mixture is applied by means of a reverse coating system.

9. A process according to one of the claims 1 to 6, characterised in that the mixture is applied by means of a screen roller.

10. A process according to one of the claims 1 to 9, characterised in that the α-cellulose includes a proportion by weight of 15-25 % of the mixture (4) with a final moisture of 3.5-7%.

11. A process according to one of the claims 1 to 10, characterised in that the corundum powder is present in a quantity of 2-30 % by weight of the mixture (3) with a final moisture of 3.5-7%.

12. A process according to one of the claims 1 to 11, characterised in that corundum as abrasion-resistant mineral is added to a resin mixture of melamine resin, α-cellulose, additives and water with a viscosity of 15 to 80 seconds, measured in a 4 mm Ford cup.

13. A process according to one of the claims 1 to 12, characterised in that the mixture to be applied to the surface (2) of the pre-impregnated decorative sheet (1) has a solid-matter content of 45-55 % by weight.

## Revendications

1. Procédé pour fabriquer du papier décoratif pour utiliser lors de la fabrication d'agglomérés stratifiés résistants à l'usure, avec lequel un mélange visqueux et présentant des composants minéraux résistants à l'usure avec une fine grandeur de particule est appliqué sur la face visible d'une feuille décorative, caractérisé en ce que le mélange est fabriqué à partir de
a) résine de mélamine,
b) cellulose α dans une quantité de 15 à 25 % de poids et avec une longueur de fibre de 10 à 40 µm,
c) corindon en tant que minéral résistant à l'usure dans une quantité de 1 à 16 % en poids et dans une grosseur de grain de 15 à 48 µm (300 à 900 mesh)
d) additifs et
e) eau
avec un malaxage intensif de telle façon qu'on obtienne une viscosité prédéfinie et que le mélange soit appliqué sur le côté visible de la feuille décorative imbibée avec de la résine au moins en une étape de travail préalable et séchée jusqu'à une humidité résiduelle de 13 à 25%, dans une quantité telle que l'épaisseur de ce revêtement est de 20 à 65 µm après avoir atteint l'humidité finale et que la feuille décorative ainsi revêtue soit séchée en au moins une autre étape de travail jusqu'à l'humidité finale.

2. Procédé selon la revendication 1, caractérisé en ce qu'on utilise comme additifs au moins des durcisseurs, des agents réticulants et des agents séparateurs.

3. Procédé selon la revendication 1 ou 2, caractérisé en ce que le mélange est fabriqué avec un mouvement de malaxage intensif.

4. Procédé selon l'une quelconque des revendications 1 à 3, caractérisé en ce que le mélange est appliqué dans une quantité de 80 à 200 g/m².

5. Procédé selon l'une quelconque des revendications 1 à 4, caractérisé en ce que le mélange est appliqué dans un mélange qui garantit une quantité de résine sèche restant à la surface de la feuille décorative de 30 à 130 g/m².

6. Procédé selon l'une quelconque des revendications 1 à 5, caractérisé en ce que le mélange fabriqué avec un malaxage intensif est appliqué sur le côté visible du papier décoratif imbibé de résine de mélamine dans un bain d'imprégnation avec une teneur en solides de 42 à 52% par rapport au poids total de la feuille décorative sèche et séché dans une section d'un tunnel de séchage jusqu'à une humidité résiduelle de 13 à 25%, l'application étant effectuée dans une section interrompant le tunnel de séchage, et en ce que la feuille décorative ainsi revêtue est séchée dans une deuxième section du tunnel de séchage jusqu'à une humidité finale de 3,5 à 7%.

7. Procédé selon l'une quelconque des revendications 1 à 6, caractérisé en ce que le mélange est appliqué au moyen d'une racle à fil avec une épaisseur de fil de 0,8 à 2 mm.

8. Procédé selon l'une quelconque des revendications 1 à 6, caractérisé en ce que le mélange est appliqué au moyen d'un système de Revers-coating.

9. Procédé selon l'une quelconque des revendications 1 à 6, caractérisé en ce que le mélange est appliqué au moyen d'un rouleau tramé.

10. Procédé selon l'une quelconque des revendications 1 à 9, caractérisé en ce que la cellulose *α* comprend une part de poids de 15 à 25% du mélange (4) pour une humidité finale de 3,5 à 7%

11. Procédé selon l'une quelconque des revendications 1 à 10, caractérisé en ce que la poudre de corindon est présente dans une quantité de 2 à 30% en poids du mélange (3) pour une humidité finale de 3,5 à 7 %.

12. Procédé selon l'une quelconque des revendications 1 à 11, caractérisé en qu'on ajoute du corindon comme minéral résistant à l'usure à un mélange de résine à base de résine de mélamine, de cellulose α, d'additifs et d'eau avec une viscosité de 15 à 80 secondes, mesurée dans un becher Ford de 4 mm.

13. Procédé selon l'une quelconque des revendications 1 à 12, caractérisé en ce que le mélange à appliquer sur la surface (2) de la feuille décorative (1) pré-imbibée présente à l'état visqueux une teneur en solides de 44 à 55%.
